# EUROPÄISCHE PATENTANMELDUNG

(11) **EP 1 686 022 A1**
(43) Veröffentlichungstag der Anmeldung: **02.08.2006**
(21) Anmeldenummer: 05002040.3
(22) Anmeldetag: 01.02.2005
(51) Int. Cl.: B60R 22/46

(54) **Sicherheitsgurtvorrichtung**

(71) Anmelder: Delphi Technologies, Inc., Troy, MI 48007 (US)
(72) Erfinder: Jungbauer, Peter, 86556 Unterbernbach (DE); Adomeit, Julius, 14195 Berlin (DE); Marshall, Stephen, 13357 Berlin (DE)
(74) Vertreter: Manitz, Finsterwald & Partner GbR

(57) **Zusammenfassung**

Sicherheitsgurtvorrichtung für Kraftfahrzeuge mit
- einem Sicherheitsgurt (11),
- einem Gurtaufroller (13),
- einem bevorzugt reversiblen Antrieb (15) für den Aufroller (13), und
- einer Kupplung (17) zwischen dem Antrieb (15) und dem Aufroller (13),
wobei die Kupplung (17) wenigstens ein sowohl in Aufwickelrichtung (W) als auch in Abwickelrichtung (U) des Aufrollers (13) bewegbares, insbesondere um eine Achse (55) des Aufrollers (13) drehbares, Kupplungselement (19) aufweist, das zusätzlich zu dieser Bewegung zu einer Vestellbewegung zwischen einer Eingriffsstellung, in welcher es den Antrieb (15) mit dem Aufroller (13) koppeln kann, und einer Freigabestellung in der Lage ist, in welcher der Aufroller (13) vom Antrieb (15) entkoppelt ist,
wobei eine Verstelleinrichtung (21) vorgesehen ist, welche die Verstellbewegung des Kupplungselementes (19) steuert, während sich das Kupplungselement (19) relativ zur Verstelleinrichtung (21) in einer Wickelrichtung (W,U) bewegt, und
wobei die Verstelleinrichtung (21) eine zusätzliche Freigabefunktion (25) aufweist, durch die das Kupplungselement (19) ohne in eine Wickelrichtung (W,U) erfolgende Bewegung relativ zur Verstelleinrichtung (21) aus der Eingriffsstellung in die Freigabestellung gelangen kann.

## Beschreibung

Die Erfindung betrifft eine Sicherheitsgurtvorrichtung für Kraftfahrzeuge mit einem Sicherheitsgurt, einem Gurtaufroller, einem bevorzugt reversiblen Antrieb für den Aufroller und einer Kupplung zwischen dem Antrieb und dem Aufroller.

Es gibt zunehmend die Bestrebung, Sicherheitsgurteinrichtungen an Kraftfahrzeugen zusätzlich zu ihrer normalen Gurtrückholfunktion mit weiteren Funktionen zu versehen. Hierzu gehört eine auch als Pre-Safe-oder Pre-Crash-Funktion bezeichnete Vorstraffungs- oder Warnfunktion, bei der mittels eines insbesondere elektrischen Antriebs der Gurtaufroller in Aufwickelrichtung angetrieben wird, um dafür zu sorgen, dass der Gurt rechtzeitig vor einem erwarteten Unfall eng am Körper des jeweiligen Fahrzeuginsassen anliegt. Der Antrieb für den Aufroller wird z.B. vor einem Unfall unmittelbar vor dem Aufprall des Fahrzeugs auf ein Hindernis oder aufgrund eines Warnsignals gestartet, das von einer im Fahrzeug implementierten Warneinrichtung erzeugt wird, z.B. wenn durch permanentes Aus- und Bewerten der Verkehrssituation festgestellt wird, dass eine gefährliche Situation vorliegt, die bestimmte vorgebbare Bedingungen erfüllt. Hierdurch kann der Insasse u.a. vor der gefährlichen Situation gewarnt werden, indem gemäß einem vorgegebenen Schema mittels des Antriebs am Gurt gezogen wird, d.h. der reversible Vorstrafferantrieb kann insofern selbst auch als eine Warneinrichtung dienen.

Vorstraffbare Gurtsysteme sollen zurücksetzbar sein, da dann, wenn der erwartete Aufprall ausbleibt bzw. Entwarnung gegeben wird, der Gurt wieder entspannt werden muss. Hierfür werden so genannte reversible Antriebe eingesetzt, die den Aufroller zum Vorstraffen in Aufwickelrichtung aktiv antreiben können und zum Entspannen des Gurtes in Abwickelrichtung betrieben werden. Ferner sollen die vorstraffbaren Gurtsysteme in der Lage sein, in dem Zeitraum zwischen dem ersten Vorstraffen des Gurtes einerseits und der Freigabe des Gurtes bei Ausbleiben des erwarteten Unfalls bzw. bei Entwarnung andererseits den Gurt im vorgespannten bzw. vorgestrafften Zustand zu halten. Für eine solche Haltefunktion können selbst hemmende Getriebe eingesetzt werden.

Um die normale Gurtfunktion zu gewährleisten, soll der Antrieb für die oben erläuterte Gurtvorstraffung nicht permanent mit dem Aufroller in Wirkeingriff stehen. Zu diesem Zweck kann zwischen dem Antrieb und dem Aufroller eine Kupplung angeordnet sein, die erst durch Aktivierung des Antriebs in Aufwickelrichtung mit dem Aufroller in Eingriff gelangt und in die entgegengesetzte Richtung angetrieben wird, um wieder außer Eingriff mit dem Aufroller zu treten.

Problematisch bei einer solchen Kupplung ist allerdings, dass sie Zusatzfunktionen des Gurtsystems, wie sie nachstehend beschrieben werden, beeinträchtigen bzw. sich in bestimmten Situationen, die in der Praxis auftreten können, als störend erweisen kann.

Eine solche Zusatzfunktion ist insbesondere die bei einem Unfall wirksam werdende eigentliche Gurtstraffung, für die z.B. ein separater pyrotechnischer Antrieb vorgesehen ist, der unabhängig von dem Elektroantrieb für die Vorstraffung mit dem Gurtaufroller zusammenwirkt. Da eine Kupplung, wie sie vorstehend beschrieben wurde, nur durch eine aktive Betätigung in "Rückwärtsrichtung" außer Eingriff mit dem Aufroller gebracht werden kann und dies zudem eine vergleichsweise lange Zeitspanne benötigt, kann die beim Wirksamwerden des pyrotechnischen Gurtstrafferantriebs still stehende Kupplung nicht aussteuern, wodurch das Gurtsystem in seiner Funktion behindert wird.

Ein entsprechendes Problem ergibt sich, wenn der Benutzer bei aktivierter reversibler Vorstraffung, d.h. bei in Eingriff befindlicher Kupplung, die Gurtverriegelung löst, sich also abschnallt, woraufhin der Sicherheitsgurt durch die normale Gurtaufrollerfunktion aufgewickelt wird. Aufgrund des stehenden reversiblen Antriebs für die Vorstraffung und damit der unbewegten Kupplung kann diese wiederum nicht aussteuern, wodurch die normale Gurtaufwickelfunktion des Gurtautomaten ebenfalls behindert wird.

Eine weitere wichtige Funktion in modernen Gurtsystemen ist eine Kraftbegrenzung, die unmittelbar im Anschluss an eine eigentliche Gurtstraf fung wirksam werden soll, um bei Erreichen einer vorgegebenen auf den Fahrzeuginsassen einwirkenden Kraft den Gurt auf definierte Weise wieder freizugeben und somit die Belastung des Insassen auf ein erträglicheres Maß zu reduzieren. Die Kraftbegrenzung erfolgt z.B. dadurch, dass der Aufroller nach der Aufwickelbewegung auf einer Seite blockiert wird, woraufhin ein Torsionsstab ein begrenztes Drehen in Abwickelrichtung ermöglicht. Durch die Blockiereinrichtung und den Torsionsstab kann das Verhalten des Systems während der Kraftbegrenzung genau vorgegeben werden. Dieses Verhalten darf nicht gestört werden. Da zwischen dem Auslösen der insbesondere pyrotechnischen Gurtstraffung und der Kraftbegrenzung sehr wenig Zeit zur Verfügung steht, kann die aufgrund der zuvor mittels des reversiblen Antriebs erfolgten Vorstraffung noch in Eingriff befindliche Kupplung nicht ausreichend schnell zurückgesetzt werden, so dass die Kupplung wiederum nicht aussteuern kann. Der dadurch weiterhin eingekuppelte reversible Vorstraffungsantrieb behindert auf diese Weise auch die Kraftbegrenzungsfunktion und verändert insbesondere deren vordefinierte Arbeitscharakteristik, z.B. hinsichtlich des maßgeblichen Kraftniveaus.

Umgekehrt haben die vorstehend erläuterten Zusatzfunktionen auch eine Beeinflussung des reversiblen Vorstraffungsantriebs zur Folge, da über die nicht ausgesteuerte Kupplung Kräfte auf den Vorstraffungsantrieb übertragen werden. Im Falle eines selbst hemmend ausgestalteten Getriebes, wie es vorstehend bereits erwähnt wurde, kann dieser Einfluss zu einer Beschädigung oder sogar Zerstörung des Getriebes führen.

Aufgabe der Erfindung ist es, eine Sicherheitsgurtvorrichtung der eingangs genannten Art derart weiterzubilden, dass die Kupplung einerseits und Zusatzfunktionen des Gurtsystems andererseits einander so wenig wie möglich beeinträchtigen, wobei insbesondere dafür gesorgt sein soll, dass in jeder beim Betrieb des Gurtsystems auftretenden Situation für ein zuverlässiges Aussteuern der Kupplung gesorgt ist, wenn oder sobald die Kupplung in der betreffenden Situation nicht mehr benötigt wird.

Die Lösung dieser Aufgabe erfolgt durch die Merkmale des Anspruchs 1 und insbesondere dadurch, dass die Kupplung wenigstens ein sowohl in Aufwickelrichtung als auch in Abwickelrichtung des Aufrollers bewegbares, insbesondere um eine Achse des Aufrollers drehbares, Kupplungselement aufweist, das zusätzlich zu dieser Antriebsbewegung zu einer Verstellbewegung zwischen einer Eingriffsstellung, in welcher es den Antrieb mit dem Aufroller koppeln kann, und einer Freigabestellung in der Lage ist, in welcher der Aufroller vom Antrieb entkoppelt ist, wobei eine Verstelleinrichtung vorgesehen ist, welche die Verstellbewegung des Kupplungselements steuert, während sich das Kupplungselement relativ zur Verstelleinrichtung in einer Wickelrichtung bewegt, und wobei die Verstelleinrichtung eine zusätzliche Freigabefunktion aufweist, durch die das Kupplungselement ohne in eine Wickelrichtung erfolgende Bewegung relativ zur Verstelleinrichtung aus der Eingriffsstellung in die Freigabestellung gelangen kann.

Der Erfindung liegt der allgemeine Gedanke zugrunde, die normale Verstellfunktion der Verstelleinrichtung um eine zusätzliche Freigabefunktion zu erweitern, die keine Relativbewegung in Aufwickelrichtung oder Abwickelrichtung zwischen Verstelleinrichtung und Kupplungselement benötigt, um das Kupplungselement in die Freigabestellung gelangen zu lassen.

Insbesondere wird erfindungsgemäß eine Relativbewegung zwischen Kupplung und Aufroller ausgenutzt, um ein insbesondere schnelles Aussteuern der Kupplung zu ermöglichen. Dabei handelt es sich um eine solche Relativbewegung, die in einer Situation, in der ein Aussteuern der Kupplung erforderlich oder zumindest wünschenswert ist, ohnehin auftritt bzw. die ein Eingesteuertbleiben der Kupplung gerade problematisch machen würde.

Diese Relativbewegung kann z.B. darin bestehen, dass sich der Aufroller in der speziellen Situation insbesondere aufgrund einer Zusatzfunktion des Gurtsystems schneller in Aufwickelrichtung bewegt als die Kupplung bzw. deren Antrieb und damit außer Eingriff mit der Kupplung gelangt, wodurch diese frei wird und in die Freigabestellung gelangen kann (z.B. bei der eigentlichen Gurtstraffung mit beispielsweise einem separaten pyrotechnischen Antrieb).

Die Relativbewegung kann aber auch darin bestehen, dass sich Kupplung und Aufroller im eingesteuerten Zustand gemeinsam in Abwickelrichtung bewegen und die zwischen Kupplung und Aufroller übertragene Kraft bzw. das übertragene Moment zeitlich so variiert, dass sich die Kupplung schneller bewegt als der Aufroller und so den Wirkeingriff mit dem Aufroller - z.B. mit Unterstützung von Rückstelleinrichtungen - überwinden, d.h. außer Eingriff mit dem Aufroller und in die Freigabestellung gelangen kann (z.B. um nach Beendigung einer gefährlichen Situation den Insassen wieder sanft und kontrolliert zu entspannen).

In einem bevorzugten Ausführungsbeispiel weist die Verstelleinrichtung eine Zwangsführung auf, welche die Verstellbewegung des Kupplungselements steuert und die einen zusätzlichen Freigabeweg aufweist, über den das Kupplungselement in die Freigabestellung gelangen kann. Bei dieser Zwangsführung handelt es sich also um mehr als eine bloße Führung für das Kupplungselement, die in der einen Richtung das Kupplungselement zwangsweise einsteuert und in der anderen Richtung zwangsweise aussteuert. Zusätzlich ist erfindungsgemäß der Freigabeweg vorgesehen, über den das Kupplungselement sozusagen unter Umgehung des normalen Rückstellweges der Zwangsführung in seine Freigabestellung gelangen kann.

Vorzugsweise umfasst die Verstelleinrichtung eine Mehrzahl von wirkungsgleichen Zwangsführungsabschnitten zum Verstellen des Kupplungselementes, wobei die Zwangsführungsabschnitte jeweils durch einen Freigabeweg für das Kupplungselement miteinander verbunden sind. Hierdurch ist sichergestellt, dass die Verstelleinrichtung sofort wieder für einen weiteren Verstellvorgang bereit ist, nachdem das Kupplungselement über den Freigabeweg aus der Eingriffsstellung in die Freigabestellung gelangt ist, da es sich dann bereits im nächsten Zwangsführungsabschnitt befindet und somit gegebenenfalls sofort wieder in die Eingriffsstellung gesteuert werden kann. Hierbei kann die Zwangsführung beispielsweise sägezahnartig ausgebildet sein.

Bevorzugt bilden die Zwangsführungsabschnitte und die Freigabewege einen geschlossenen, insbesondere auf einen Kreis um eine Achse des Aufrollers liegenden Zwangsführungsweg für das Kupplungselement. Auf diese Weise können ohne Unterbrechung beliebig viele Verstellvorgänge des Kupplungselementes erfolgen.

In einem weiteren bevorzugten Ausführungsbeispiel ist vorgesehen, dass die Zwangsführung für die beiden Verstellrichtungen unabhängig voneinander wirksame Steuerkonturen aufweist.

Bevorzugt ist die Zwangsführung derart auf das Kupplungselement und eine Antriebswelle des Aufrollers abgestimmt, dass bei einem Einsteuervorgang das Kupplungselement zunächst entlang einer Einsteuerkontur geführt ist und nach zumindest teilweisem Eingriff mit der Antriebswelle die Einsteuerkontur verlässt und in eine Freigabezone gelangt, in der das Kupplungselement an einem Einsteueranschlag anliegt und aus der das Kupplungselement entweder in den Freigabeweg gelangt, wenn das Kupplungselement aufgrund einer Bewegung der Antriebswelle in Aufwickelrichtung relativ zum Kupplungselement außer Eingriff mit der Antriebswelle gelangen kann, oder mit einer der Einsteuerkontur gegenüber liegenden Aussteuerkontur zusammenwirkt, wenn sich das Kupplungselement zunächst aufgrund eines das Kupplungselement und die Antriebswelle in Eingriff haltenden äußeren Einflusses gemeinsam mit der Antriebswelle in Abwickelrichtung bewegt und dann aufgrund einer Veränderung des äußeren Einflusses insbesondere mit Unterstützung einer Rückstelleinrichtung außer Eingriff mit der Antriebswelle gelangen kann. Mit "äußerer Einfluss" ist dabei z.B. ein sich nach Art einer Feder wieder "entspannender" Fahrzeuginsasse gemeint, der den Gurt in Abwickelrichtung beaufschlagt, wenn er sich nach einer mittels des reversiblen Antriebs erfolgenden Vorstraffung - bei welcher er samt Kleidung, Muskulatur und Körpergewebe durch den Gurt leicht zusammengedrückt wird - wieder entspannt.

Eine derartige Abstimmung kann den in der Praxis auftretenden Anforderungen und insbesondere den benötigten oder gewünschten Zusatzfunktionen des Gurtsystems, wie sie einleitend beschrieben wurden, in besonders vorteilhafter Weise gerecht werden, da stets für ein definiertes Aussteuern des Kupplungselements gesorgt ist und somit keine ungewünschten Beeinträchtigungen auftreten können.

Die Funktionsweise einer derart abgestimmten Anordnung wird bei der Beschreibung eines Ausführungsbeispiels in Verbindung mit den Figuren nachstehend ausführlich erläutert, so dass hierauf an dieser Stelle nicht näher eingegangen wird.

In einem weiteren bevorzugten Ausführungsbeispiel ist das Kupplungselement an oder in einem insbesondere als Zahnrad ausgebildeten Trägerrad angebracht, das mittels eines bevorzugt einen Elektromotor umfassenden Antriebsorgans drehbar ist. Zwischen diesem im Folgenden auch als Antriebsrad oder Antriebszahnrad bezeichneten Trägerrad und dem beispielsweise als Antriebsorgan dienenden Elektromotor kann ein selbst hemmendes Getriebe vorgesehen sein, welches es ermöglicht, einen vorgestrafften Zustand des Sicherheitsgurtes bei ausgeschaltetem Elektromotor zu halten.

Das Kupplungselement ist bevorzugt verschwenkbar am oder im Trägerrad gehalten. Hierzu kann das Kupplungselement beispielsweise mit einem Vorsprung in eine Seite des Trägerrades eingreifen. Über diesen Vorsprung erfolgt dann die Mitnahme des Kupplungselements durch das sich drehende Trägerrad. Gleichzeitig kann das Kupplungselement um diesen Vorsprung relativ zum Trägerrad zwischen Eingriffsstellung und Freigabestellung verschwenkt werden.

Des Weiteren wird erfindungsgemäß vorgeschlagen, dass das Kupplungselement klinken- oder klauenartig ausgebildet ist und eine mittels des Kupplungselements drehbare Antriebswelle des Aufrollers ein sägezahnartiges Profil aufweist. Durch eine derartige Ausgestaltung kann die Antriebswelle des Aufrollers in der einen Drehrichtung über das Kupplungselement Kraft übertragen, wohingegen das Kupplungselement freigegeben werden kann, wenn sich die Antriebswelle des Aufrollers in der entgegengesetzten Richtung relativ zum Kupplungselement dreht.

Gemäß einem weiteren bevorzugten Ausführungsbeispiel der Erfindung weist das Kupplungselement ein sich durch das Trägerrad hindurch erstreckendes, insbesondere stiftförmiges Führungselement auf, das mit der auf der anderen Seite des Trägerrads angeordneten Verstelleinrichtung zusammenwirkt und insbesondere in eine Zwangsführung der Verstelleinrichtung eingreift. Auf diese Weise kann ein besonders kompakter Aufbau erzielt werden.

Gemäß einer besonders bevorzugten Ausgestaltung der Erfindung ist für das Kupplungselement eine vorzugsweise als Rückstellfeder ausgebildete Rückstelleinrichtung vorgesehen, die eine Aussteuerbewegung des Kupplungselements von der Eingriffsstellung in die Freigabestellung zumindest unterstützt. Wenn beispielsweise das mit dem Aufroller in Eingriff stehende Kupplungselement im nicht angetriebenen Zustand, z.B. bei still stehendem Antriebsrad, aufgrund einer Weiterbewegung des Aufrollers in Aufwickelrichtung durch Wirksamwerden z.B. eines pyrotechnischen Gurtstraffers oder des normalen Aufrollmechanismus beim Lösen der Gurtverriegelung außer Eingriff mit dem Gurtaufroller gelangt, kann die Rückstelleinrichtung sofort für eine Überführung des Kupplungselements von der Eingriffsstellung in die Freigabestellung sorgen, und zwar insbesondere über einen zusätzlichen Freigabeweg einer an der Verstelleinrichtung ausgebildeten Zwangsführung. Die Rückstelleinrichtung kann folglich einen wesentlichen Teil der erfindungsgemäßen Freigabefunktion der Verstelleinrichtung bilden bzw. wesentlich zu einer solchen Freigabefunktion beitragen.

Vorzugsweise ist die Rückstelleinrichtung in eine Haltescheibe integriert, mittels welcher das Kupplungselement an oder in einem antreibbaren Trägerrad gehalten ist. Auf diese Weise wird eine für die Anbringung des Kupplungselements am Trägerrad vorgesehene Einrichtung gleichzeitig zur Integration der Rückstelleinrichtung genutzt, wodurch sich Aufbau und Montage vereinfachen. Außerdem kann die Haltescheibe als Lager für insbesondere verschwenkbare Kupplungselemente dienen.

Die Anzahl der Kupplungselemente ist erfindungsgemäß grundsätzlich beliebig. Bevorzugt sind mehrere Kupplungselemente vorgesehen, insbesondere eine relativ geringe Anzahl von z.B. zwei, drei oder vier Kupplungselementen, die gleichmäßig in Umfangsrichtung beabstandet um eine Achse des Aufrollers angeordnet und insbesondere an oder in einem Trägerrad gehalten sind.

Was die Verstelleinrichtung anbetrifft, so ist bevorzugt vorgesehen, dass diese unter Überwindung einer Haltekraft durch das angetriebene Kupplungselement mitnehmbar ist. Durch die auf die Verstelleinrichtung einwirkende Haltekraft ist zunächst sichergestellt, dass sich das Kupplungselement, wenn es - beispielsweise mittels eines vorstehend erwähnten Trägerrades - in Aufwickelrichtung oder Abwickelrichtung angetrieben wird, relativ zur Verstelleinrichtung bewegt, um hierdurch die erforderliche Umsteuerung zwischen der Freigabestellung und der Eingriffsstellung oder umgekehrt zu erfahren. Die danach erfolgende Mitnahme der Verstelleinrichtung durch das Kupplungselement ermöglicht es, dass das Kupplungselement permanent in Eingriff mit der Verstelleinrichtung und insbesondere einer an dieser ausgebildeten Zwangsführung stehen kann. Das Kupplungselement kann folglich nach Abschluss eines Einsteuervorgangs oder Aussteuervorgangs problemlos unter Mitnahme der dann die Haltekraft überwindenden Verstelleinrichtung weiterbewegt werden.

In einer bevorzugten praktischen Ausgestaltung ist die Verstelleinrichtung als insbesondere kreisringförmige Steuerscheibe ausgebildet, die auf zumindest einer Seite mit einer Zwangsführung für das Kupplungselement versehen ist und mehrere bevorzugt in zumindest näherungsweise radialer Richtung abstehende, bei Überschreiten einer Haltekraft nachgebende Haltearme aufweist, die zum Halten der Steuerscheibe mit einer vorzugsweise ortsfesten Haltekontur in Eingriff stehen.

Eine durch Mitnahme der Verstelleinrichtung überwindbare Haltekraft kann ausgenutzt werden, indem gemäß einer weiteren bevorzugten Ausgestaltung der Erfindung die Verstelleinrichtung, die gegen eine Rückstellkraft, welche insbesondere von als Federarmen ausgebildeten Haltearmen erzeugt wird, durch das Kupplungselement mitgenommen wird, eine Aussteuerbewegung des Kupplungselements von der Eingriffsstellung in die Freigabestellung zumindest unterstützt, und zwar insbesondere mittels einer Aussteuerkontur einer Zwangsführung für das Kupplungselement. Auf diese Besonderheit wird ebenfalls nachstehend in Verbindung mit der Beschreibung eines konkreten Ausführungsbeispiels näher eingegangen.

Die Erfindung wird im Folgenden beispielhaft unter Bezugnahme auf die Zeichnung beschrieben. Es zeigen:
- Fig. 1: eine Explosionsansicht einer Sicherheitsgurtvorrichtung gemäß einer Ausführungsform der Erfindung,
- Fig. 2: eine Ansicht auf die vom Betrachter der Fig. 1 abgewandte Seite einer Verstelleinrichtung der Sicherheitsgurtvorrichtung von Fig. 1, und
- Fig. 3: eine Ansicht auf die vom Betrachter der Fig. 1 abgewandte Seite eines Antriebszahnrades der Sicherheitsgurtvorrichtung von Fig. 1.

Die erfindungsgemäße Sicherheitsgurtvorrichtung umfasst gemäß der dargestellten Ausführungsform einen Sicherheitsgurt 11, der auf einen Aufroller 13 gewickelt ist, welcher um eine die Hauptdrehachse des Gurtsystems bildende Achse 55 in Aufwickelrichtung W und in Abwickelrichtung U drehbar ist. Hierzu ist der Aufroller 13 mit einer eine Verzahnung 51 mit einem sägezahnartigen Profil tragenden Antriebswelle 33 versehen. Mit der Antriebswelle 33 wirkt nicht nur ein die Erfindung beinhaltender, nachstehend ausführlich erläuterter Elektroantrieb 15 mit einer Kupplung 17 zusammen, sondern die Antriebswelle 33 kann außerdem von weiteren, nicht dargestellten Einrichtungen der Gurtvorrichtung in Aufwickelrichtung W beaufschlagt werden, um verschiedene Zusatzfunktionen zu erfüllen, wie sie im Einleitungsteil beschrieben wurden. Hierauf wird an anderer Stelle näher eingegangen.

Der erwähnte Elektroantrieb 15 umfasst einen nicht dargestellten Elektromotor, der ein als Träger für nachstehend näher beschriebene Kupplungselemente 19 dienendes Antriebszahnrad 39 in Abhängigkeit von seiner Ansteuerung sowohl in Aufwickelrichtung W als auch in Abwickelrichtung U in Drehung versetzen kann. Aufgrund dieser Eignung zur Bidirektionalität wird der Antrieb auch als reversibler Antrieb bezeichnet.

Zwischen dem Elektromotor und dem Antriebszahnrad 39 kann ein Getriebe angeordnet sein, bei dem es sich um ein selbst hemmendes Getriebe handeln kann. Hierauf wurde im Einleitungsteil bereits eingegangen: Der hier in Rede stehende Antrieb 15 dient insbesondere zur Realisierung einer Gurtvorstraffung im Rahmen einer so genannten Pre-Safe- oder Pre-Crash-Funktion des Gurtsystems. Bei Verwendung eines selbst hemmenden Getriebes kann der vorgestraffte Gurtzustand bei ausgeschaltetem Elektromotor aufrechterhalten werden. Durch dieses Konzept wird Energie gespart und der Elektromotor vor Überbelastungen geschützt. Unter Überwindung der Selbsthemmung des Getriebes kann bei entgegen der Aufwickelrichtung W betriebenem Elektromotor der zuvor eingestellte Vorstraffungs- oder Vorspannungszustand des Gurtes in definierter Weise wieder aufgehoben werden. Insofern handelt es sich um ein reversibles System bzw. einen reversiblen Antrieb.

Das Antriebszahnrad 39 ist mit einer Mehrzahl von Aussparungen 57, 59, 61 und 63 versehen. Die Aussparungen 57 dienen zur Aufnahme von Lagerzapfen 65, die an den bereits erwähnten Kupplungselementen 19 ausgebildet sind, um die Kupplungselemente 19 einerseits bei Drehung in Aufwickelrichtung W oder Abwickelrichtung U mitzunehmen und andererseits verschwenkbar zu halten.

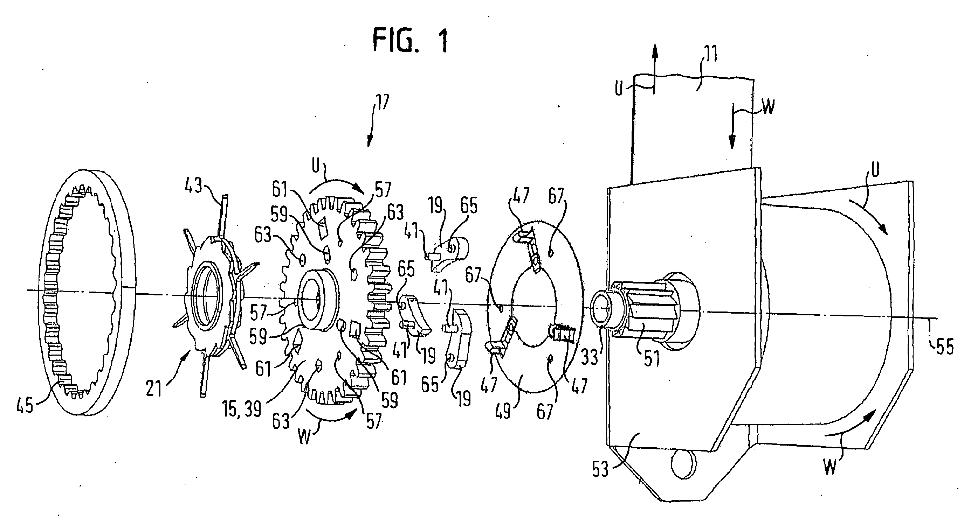

Im zusammengesetzten Zustand erstrecken sich ebenfalls an den Kupplungselementen 19 ausgebildete Führungsstifte 41 durch die Aussparungen 59 hindurch, die ausreichend groß dimensioniert sind, um ein Verschwenken der Kupplungselemente 19 nicht zu behindern. Die Länge der Führungsstifte 41 ist bezüglich der Dicke des Antriebszahnrads 39 derart bemessen, dass die Führungsstifte 41 über die gegenüberliegende, dem Betrachter der Fig. 1 zugewandte Seite des Antriebszahnrads 39 hinaus vorstehen und mit einer Verstelleinrichtung 21 (Steuerscheibe) zusammenwirken, worauf nachstehend näher eingegangen wird.

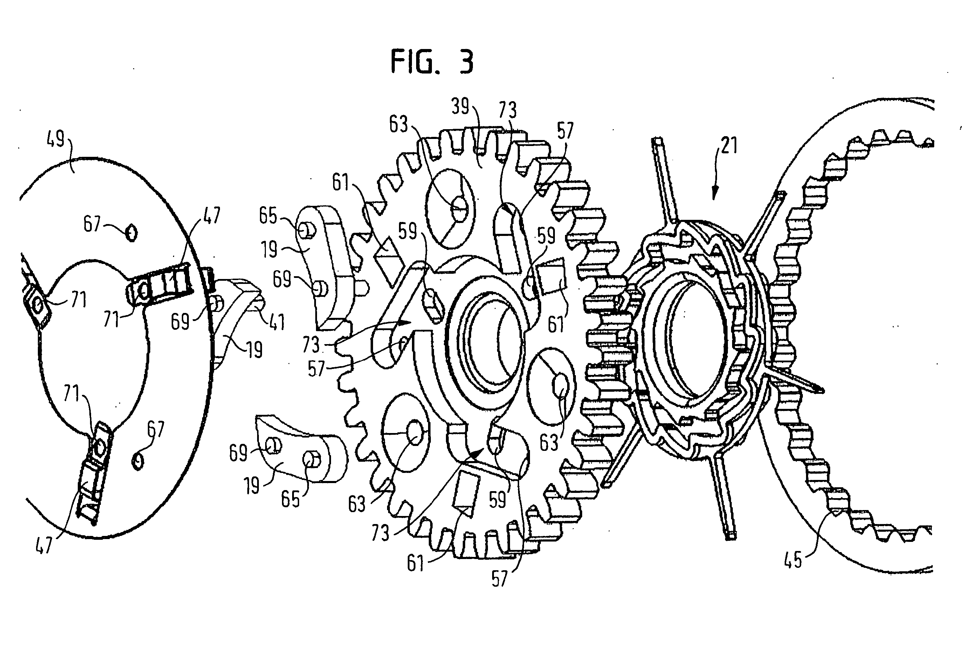

Die Aussparungen 61 des Antriebszahnrades 39 dienen zur Aufnahme von bezogen auf die Drehachse 55 radial beweglichen Rückstellfedern 47 für die Kupplungselemente 19. Die Rechteckaussparungen 61 sind ausreichend groß dimensioniert, um den erforderlichen radialen Verstellweg der Rückstellfedern 47 zu gewährleisten. Die Rückstellfedern 47 sind in eine kreisringförmige Haltescheibe 49 integriert, die zum Halten der in das Antriebszahnrad 39 gesteckten Kupplungselemente 19 mit dem Antriebszahnrad 39 verschraubt oder auf andere Art und Weise verbunden wird. Hierzu dienen die Befestigungsaussparungen 63 im Antriebszahnrad 39 und entsprechende Aussparungen (nicht dargestellt) in der Haltescheibe 49. Die gewissermaßen ein Multifunktionsteil darstellende Haltescheibe 49 hat darüber hinaus noch eine weitere Funktion, indem sie als Lager für Lagerzapfen 65 auf der von dem Betrachter der Fig. 1 abgewandten Seite der Kupplungselemente 19 dient. Hierzu sind in der Haltescheibe 49 die Aussparungen 67 vorgesehen (vgl. auch Fig. 3, auf die nachstehend eingegangen wird).

Fig. 3 zeigt zusätzlich zu den vorstehend bereits erwähnten Bestandteilen und Merkmalen, dass das Antriebszahnrad 39 auf seiner von der Steuerscheibe 21 abgewandten Seite mit taschenartigen Aussparungen 73 für die Kupplungselemente 19 versehen ist, die sich im zusammengesetzten Zustand vollständig innerhalb der Taschen 73 befinden. Die Taschen 73 sind ausreichend groß bemessen, um die Schwenkbewegungen der Kupplungselemente 19 zuzulassen.

Außerdem zeigt Fig. 3, dass die Kupplungselemente 19 - gewissermaßen in Verlängerung ihrer Führungsstifte 41 - mit Rückstellvorsprüngen 69 versehen sind, die in entsprechende Aussparungen 71 an den Rückstellfedern 47 eingreifen. Ferner zeigt Fig. 3 die mit den Lageraussparungen 67 der Haltescheibe 49 zusammenwirkenden Lagerzapfen 65 der Kupplungselemente 19.

Im zusammengesetzten Zustand streben die Rückstellfedern 47 danach, die in Anpassung an das Profil der Antriebswellenverzahnung 51 klauen-oder klinkenartig ausgebildeten Kupplungselemente 19 mit ihrem Eingriffsende radial außen und damit in einer Freigabestellung zu halten, in der die Kupplungselemente 19 außer Eingriff mit der Antriebswelle 51 stehen. Um die Kupplungselemente 19 relativ zum Antriebszahnrad 39 um die Lagerzapfen 65 radial nach innen zu verschwenken und somit in Eingriff mit der Antriebswelle 51 zu steuern, muss folglich die Rückstellkraft der Rückstellfedern 47 überwunden werden.

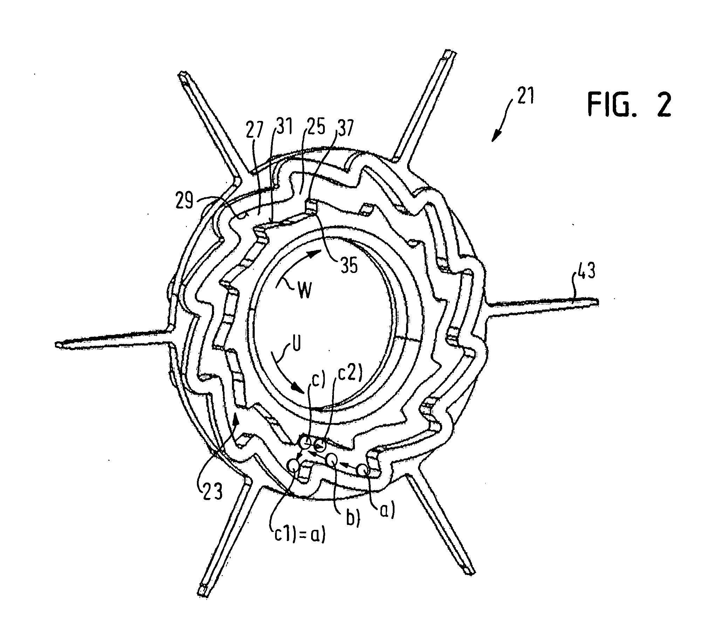

Wie bereits erwähnt, wirken die Kupplungselemente 19 außerdem über ihre durch das Antriebszahnrad 39 hindurch ragenden Führungsstifte 41 mit der Steuerscheibe 21 zusammen, die nachfolgend insbesondere in Verbindung mit Fig. 2 näher beschrieben wird.

Die Steuerscheibe 21 ist kreisringförmig ausgebildet und weist eine Mehrzahl von radial abstehenden, gleichmäßig in Umfangsrichtung beabstandeten Haltearmen 43 auf, die in eine nach Art einer Verzahnung ausgebildete Haltekontur 45 eingreifen, welche bezüglich des Rahmens oder Gehäuses 43 des Aufrollers 13 feststehend und insbesondere drehfest angeordnet ist. Die Haltearme 43 sind insofern nachgiebig ausgebildet, als die Steuerscheibe 21 bis zum Erreichen einer maximalen Haltekraft über die freien Enden der Haltearme 43 an einer Drehung relativ zur gehäusefesten Haltekontur 45 gehindert ist, bei Überschreiten der Haltekraft aber ratschenartig mit von Tal zu Tal der Haltekontur 45 springenden freien Enden der Haltearme 43 gedreht werden kann.

Die Haltearme 43 erfüllen außerdem eine Rückstellfunktion, d.h. eine Auslenkung der Steuerscheibe 21 erfolgt gegen eine Rückstellkraft der insofern als Federarme dienenden Haltearme 43, die bei Nachlassen oder Wegnahme des die Steuerscheibe 21 auslenkenden Momentes dafür sorgt, dass die Steuerscheibe 21 wieder zurück in ihren entspannten Ausgangszustand gelangt.

Auf der vom Betrachter der Fig. 1 abgewandten Seite ist die Steuerscheibe 21 mit einer Zwangsführung 23 versehen, deren Aufbau und Wirkungsweise in Verbindung mit Fig. 2 erläutert wird.

Die Zwangsführung 23 wird von einer geschlossenen, auf einem Kreis um die Systemachse 55 liegenden Nut gebildet, in welche die Führungsstifte 41 der Kupplungselemente 19 permanent hineinragen. Der Verlauf der Zwangsführungsnut 23 entspricht im Wesentlichen einer Sägezahnform. Begrenzt wird die Führungsnut 23 von einer radial äußeren Einsteuerkontur 29 und einer radial inneren Aussteuerkontur 31. Die Einsteuerkontur 29 und die Aussteuerkontur 31 weisen jeweils einen sägezahnartigen Verlauf auf, sind aber nicht identisch geformt. Der Durchmesser der Führungsstifte 41 ist in Bezug auf die Breite der Zwangsführungsnut 23 derart bemessen, dass die Führungsstifte 41 während des Betriebs entweder mittels der Einsteuerkontur 29 oder mittels der Aussteuerkontur 31 zwangsgeführt werden.

Die Zwangsführungsnut 23 besteht aus einer Vielzahl von aufeinander folgenden, gleich wirkenden Zwangsführungsabschnitten 27, die sich jeweils bezogen auf die Systemachse 55 eher tangential als radial und somit unter einem großen Winkel zu einer Normalen der Drehachse 55 erstrecken. Bei den Freigabewegen 25, die jeweils zwei aufeinander folgende Zwangsführungsabschnitte 27 miteinander verbinden und auf die nachstehend näher eingegangen wird, ist dieser Winkel dagegen vergleichsweise klein, da die Freigabeabschnitte 25 der Zwangsführungsnut 23 sich eher in radialer Richtung als in tangentialer Richtung erstrecken.

Die Funktionsweise der erfindungsgemäßen Sicherheitsgurtvorrichtung und insbesondere der Kupplung 17 mit den mit der Steuerscheibe 21 und deren Zwangsführungsnut 23 zusammenwirkenden Kupplungselementen 19 ist wie folgt:
Im ausgekuppelten Ausgangszustand bei ausgeschaltetem Elektroantrieb 15 und somit stehendem Antriebszahnrab 39 sind die Kupplungselemente 19 nach außen geschwenkt und dort mittels der Rückstellfedern 47 gehalten. Die Führungsstifte 41 liegen somit an einer am weitesten radial außen gelegenen Stelle der Einsteuerkontur 29 der Zwangsführungsnut 23 an, wie es durch die Stellung a) unten in Fig. 2 angedeutet ist. Der Gurtaufroller 13 kann in diesem Zustand seine normale Gurtfunktion ungestört von dem reversiblen Vorstraffungsantrieb 15 und insbesondere dessen Kupplungselementen 19 erfüllen.

Für eine Vorstraffung oder Vorspannung des Gurtes 11 im Rahmen einer Pre-Safe- oder Pre-Crash-Funktion wird das Antriebszahnrad 39 mittels des Elektromotors in Aufwickelrichtung W gedreht. Die mitdrehenden Kupplungselemente 19 werden mittels der Einsteuerkontur 29 der Steuerscheibe 21 über ihre Führungsstifte 41 nach innen geschwenkt (Stellung b)). Die Steuerscheibe 21 dreht sich dabei nicht mit, da sie über ihre Haltearme 43 festgehalten wird.

Bei weiterdrehendem Antriebszahnrad 39 gelangen die Kupplungselemente 19 mit ihren freien Eingriffsenden in Eingriff mit der Verzahnung 51 der Antriebswelle 33 des Aufrollers 13 (Fig. 1), wodurch der Aufroller 13 in Aufwickelrichtung W gedreht wird. Sobald die Führungsstifte 41 der Kupplungselemente 19 an einem Einsteueranschlag 37 anliegen (Stellung c)), wird bei weiterdrehendem Antriebszahnrad 39 die Steuerscheibe 21 über die Führungsstifte 41 der Kupplungselemente 19 mitgenommen und somit unter Überwindung der Haltekraft bzw. des Haltemomentes der Haltearme 43 relativ zur gehäusefesten Haltekontur 45 in Drehung versetzt.

Sobald die gewünschte Vorspannung bzw. Vorstraffung des Gurtes 11 erreicht ist, wird der Elektromotor des reversiblen Antriebs 15 ausgeschaltet oder in einen Haltezustand versetzt. Der Vorspannungszustand wird entweder durch ein vorstehend erwähntes selbst hemmendes Getriebe zwischen dem Elektromotor und dem Antriebszahnrad 39 oder durch den im Haltezustand befindlichen, weiterhin erregten Elektromotor gehalten. Um den Vorspannungszustand wieder zu verlassen, wird der Elektromotor in Abwickelrichtung U aktiviert und somit das Antriebszahnrad 39 nunmehr in die entgegengesetzte Richtung gedreht. Solange die Kupplungselemente 19 mit ihren Eingriffsenden noch in Eingriff mit der Verzahnung 51 der Antriebswelle 33 stehen, können die permanent auf die Kupplungselemente 19 einwirkenden Rückstellfedern 47 die Kupplungselemente 19 nicht nach außen schwenken, d.h. die Führungsstifte 41 können nicht auf kürzestem Wege über die Freigabewege 25 der Zwangsführungsnut 23 radial nach außen gelangen. Erst wenn die Kupplungselemente 19 durch die Drehung des Antriebszahnrads 39 in Abwickelrichtung U nach und nach außer Eingriff mit der Antriebswelle 33 gelangen, können die Rückstellfedern 47 die Kupplungselemente 19 um das jeweils entsprechende Maß radial nach außen schwenken.

Der genaue Ablauf dieses "normalen" Aussteuerns bei gewissermaßen "im Rückwärtsgang" betriebenem reversiblen Antrieb ist davon abhängig, ob und in welcher Weise auf den Gurt eine Kraft bzw. ein Moment aufgrund eines äußeren Einflusses einwirkt, der danach strebt, den Gurt auszuziehen.

Anders ist die Situation, wenn auf das vorstehend beschriebene System zusätzliche Einrichtungen eingreifen. Ein Beispiel ist ein unter Umgehung des Antriebszahnrades 39 und der Kupplungselemente 19 auf den Aufroller 13 einwirkender, insbesondere pyrotechnischer Gurtstraffer (nicht dargestellt), der ausgehend von einem vorstehend erläuterten Vorspannungs-oder Vorstraffungszustand wirksam wird, um den Gurt 11 zu straffen, wie es auch im Einleitungsteil bereits erläutert wurde.

Ein derartiger Gurtstraffer bewirkt, dass sich die Antriebswelle 33 in Aufwickelrichtung W dreht, und zwar entweder relativ zu dem bereits still stehenden, momentan den Vorstraffungszustand mittels der eingesteuerten Kupplungselemente 19 haltenden Antriebszahnrad 39 oder schneller als das sich noch in Aufwickelrichtung W drehende Antriebszahnrad 39. In einer solchen Situation dreht sich somit die Verzahnung 51 der Antriebswelle 33 relativ zu den sich in der Eingriffsstellung befindlichen Kupplungselementen 19 in Aufwickelrichtung W, wodurch die Kupplungselemente 19 außer Eingriff mit der Verzahnung 51 gelangen, ohne dass hierfür eine Drehung des Antriebszahnrads 39 bzw. eine Relativverdrehung zwischen den Kupplungselementen 19 und der Steuerscheibe 21 erforderlich wäre.

Aufgrund der sich somit gewissermaßen "wegdrehenden" Antriebswelle 33 werden die Kupplungselemente 19 folglich freigegeben, wodurch die Rückstellfedern 47 wirksam werden, welche die Kupplungselemente 19 sofort radial nach außen schwenken können, da sich die in einer Freigabezone 35 befindlichen, am Einsteueranschlag 37 anliegenden Führungsstifte 41 durch die erfindungsgemäße Ausgestaltung der Zwangsführungsnut 23 aus dieser Stellung c) über die Freigabewege 25 in die Stellung c1) bewegen können, die der Ausgangsstellung a) entspricht.

Die Kupplungselemente 19 werden folglich sehr schnell ausgekuppelt, so dass sie die Funktionsweise des pyrotechnischen Gurtstraffers in keiner Weise beeinträchtigen.

Entsprechend ist der Ablauf, wenn sich der betreffende Fahrzeuginsasse bei sich im Rahmen der Vorstraffungsfunktion drehendem Antriebszahnrad 39 bzw. bei den Vorstraffungszustand haltendem Antriebszahnrad 39, also bei in Eingriff mit der Antriebswelle 33 stehenden Kupplungselementen 19, abschnallt, d.h. die Gurtverriegelung löst. In dieser Situation wird die normale Aufwickelfunktion des Aufrollers 13 wirksam, die ebenfalls zu einer eigenständigen Drehung der Antriebswelle 33 in Aufwickelrichtung W relativ zu den eingesteuerten Kupplungselementen 19 führt. Die Antriebswelle 33 dreht sich also auch in diesem Fall selbst außer Eingriff mit den Kupplungselementen 19, die dadurch wiederum frei werden und mittels der Rückstellfedern 47 aufgrund der Freigabewege 25 der Zwangsführung 23 sofort radial nach außen geschwenkt werden können und somit die automatische Aufwickelfunktion des Aufrollers 13 nicht beeinträchtigen.

Das sofortige Aussteuern der Kupplungselemente 19 im Anschluss an das Auslösen des Gurtstraffers bringt außerdem den Vorteil mit sich, dass eine anschließende Kraftbegrenzungsfunktion des Gurtsystems nicht durch die Kupplungselemente 19 behindert wird.

Darüber hinaus ist es erfindungsgemäß möglich, mittels des Elektroantriebs den Aufroller 13 in Abwickelrichtung U zu drehen, um auf diese Weise eine Gurtentspannung oder Gurtausgabe zu unterstützen oder zumindest nicht zu behindern. Ein solches Entspannen des Gurtes 11 stellt sich beispielsweise dann ein, wenn im Anschluss an eine im Rahmen einer Pre-Safe- oder Pre-Crash-Funktion erfolgte Vorspannung des Gurtes 11 das Vorspannen unterbrochen bzw. der Vorspannungszustand wieder aufgehoben wird, d.h. keine eigentliche Gurtstraffung mehr erfolgt.

Zum kontrollierten Entspannen des Gurtes 11 wird der Elektromotor so angesteuert, dass sich das Antriebszahnrad 39 in Abwickelrichtung U dreht. In Abhängigkeit von der Situation am Aufroller 13 bzw. im Sicherheitsgurt 11, insbesondere von der sich im System befindenden Last, ist hierbei die über die Kupplungselemente 19 und die Verzahnung 51 auf die Antriebswelle 33 übertragene Kraft bzw. das übertragene Moment unterschiedlich groß und kann insbesondere zeitlich variieren.

Typischerweise ist bei einer aktiven Entspannung des Gurtes 11 mittels der in Abwickelrichtung U angetriebenen Kupplungselemente 19 die aufgrund des äußeren Einflusses übertragene Kraft bzw. das übertragene Moment anfangs relativ groß, so dass die Kupplungselemente 19 nicht außer Eingriff mit der Antriebswelle 33 gelangen und somit nicht aussteuern können. Die Führungsstifte 41 der Kupplungselemente 19 gelangen zunächst ausgehend von der Stellung c) am Einsteueranschlag 37 in eine Stellung c2), in der sie die radial innen liegende Aussteuerkontur 31 berühren. Da die Kupplungselemente 19 eingesteuert bleiben und trotz der Wirkung der Rückstellfedern 47 nicht radial nach außen schwenken können, wird bei sich weiter in Abwickelrichtung U drehendem Antriebszahnrad 39 die Steuerscheibe 21 in Abwickelrichtung U unter Überwindung der Halte- bzw. Rückstellkraft ihrer Federarme 43 mitgenommen.

Sobald die übertragene Kraft bzw. das Moment einen bestimmten Wert unterschreitet, können sich die Führungsstifte 41 der Kupplungselemente 19 mit Unterstützung durch die Rückstellfedern 47 und die Federarme 43 entlang der Aussteuerkontur 31 von der Stellung c2) in die Stellung a) bewegen, so dass die Kupplungselemente 19 außer Eingriff mit der Antriebswelle 33 gelangen und somit aussteuern.

### Bezugszeichenliste

- 11: Sicherheitsgurt
- 13: Gurtaufroller
- 15: Antrieb
- 17: Kupplung
- 19: Kupplungselement
- 21: Verstelleinrichtung, Steuerscheibe
- 23: Zwangsführung, Führungsnut
- 25: Freigabefunktion, Freigabeweg
- 27: Zwangsführungsabschnitt
- 29: Einsteuerkontur
- 31: Aussteuerkontur
- 33: Antriebswelle des Aufrollers
- 35: Freigabezone
- 37: Einsteueranschlag
- 39: Trägerrad, Antriebszahnrad
- 41: Führungsstift
- 43: Haltearm, Federarm
- 45: Haltekontur
- 47: Rückstelleinrichtung, Rückstellfeder
- 49: Haltescheibe
- 51: Verzahnung der Antriebswelle des Aufrollers
- 53: Rahmen, Gehäuse
- 55: Achse
- 57: Aussparung für Lagerzapfen des Kupplungselementes
- 59: Aussparung für Führungsstift des Kupplungselementes
- 61: Aussparung für Rückstellfeder
- 63: Befestigungsaussparung
- 65: Lagerzapfen des Kupplungselementes
- 67: Aussparung der Haltescheibe für Lagerzapfen des Kupplungselementes
- 69: Rückstellvorsprung des Kupplungselementes
- 71: Aussparung an Rückstellfeder für Rückstellvorsprung
- 73: Tasche für Kupplungselement

- W: Aufwickelrichtung
- U: Abwickelrichtung

## Patentansprüche

1. Sicherheitsgurtvorrichtung für Kraftfahrzeuge mit
- einem Sicherheitsgurt (11),
- einem Gurtaufroller (13),
- einem bevorzugt reversiblen Antrieb (15) für den Aufroller (13), und
- einer Kupplung (17) zwischen dem Antrieb (15) und dem Aufroller (13),
wobei die Kupplung (17) wenigstens ein sowohl in Aufwickelrichtung (W) als auch in Abwickelrichtung (U) des Aufrollers (13) bewegbares, insbesondere um eine Achse (55) des Aufrollers (13) drehbares, Kupplungselement (19) aufweist, das zusätzlich zu dieser Bewegung zu einer Verstellbewegung zwischen einer Eingriffsstellung, in welcher es den Antrieb (15) mit dem Aufroller (13) koppeln kann, und einer Freigabestellung in der Lage ist, in welcher der Aufroller (13) vom Antrieb (15) entkoppelt ist,
wobei eine Verstelleinrichtung (21) vorgesehen ist, welche die Verstellbewegung des Kupplungselementes (19) steuert, während sich das Kupplungselement (19) relativ zur Verstelleinrichtung (21) in einer Wickelrichtung (W, U) bewegt, und
wobei die Verstelleinrichtung (21) eine zusätzliche Freigabefunktion (25) aufweist, durch die das Kupplungselement (19) ohne in eine Wickelrichtung (W, U) erfolgende Bewegung relativ zur Verstelleinrichtung (21) aus der Eingriffsstellung in die Freigabestellung gelangen kann.

2. Sicherheitsgurtvorrichtung nach Anspruch 1,
**dadurch gekennzeichnet ,**
**dass** die Verstelleinrichtung (21) eine die Verstellbewegung des Kupplungselementes (19) steuernde, insbesondere in Form einer Nut vorgesehene, Zwangsführung (23) aufweist, die einen zusätzlichen Freigabeweg (25) umfasst, über den das Kupplungselement (19) in die Freigabestellung gelangen kann.

3. Sicherheitsgurtvorrichtung nach Anspruch 2,
**dadurch gekennzeichnet ,**
**dass** die Zwangsführung (23) sägezahnartig ausgebildet ist.

4. Sicherheitsgurtvorrichtung nach Anspruch 2 oder 3,
**dadurch gekennzeichnet ,**
**dass** die Verstelleinrichtung (21) eine Mehrzahl von wirkungsgleichen Zwangsführungsabschnitten (27) zum Verstellen des Kupplungselementes (19) aufweist, die jeweils durch einen Freigabeweg (25) für das Kupplungselement (19) miteinander verbunden sind.

5. Sicherheitsgurtvorrichtung nach Anspruch 4,
**dadurch gekennzeichnet ,**
**dass** die Zwangsführungsabschnitte (27) und die Freigabewege (25) einen geschlossenen, insbesondere auf einem Kreis um eine Achse (55) des Aufrollers (13) liegenden, Zwangsführungsweg für das Kupplungselement (19) bilden.

6. Sicherheitsgurtvorrichtung nach Anspruch 4 oder 5,
**dadurch gekennzeichnet ,**
**dass** die Zwangsführungsabschnitte (27) jeweils unter einem vergleichsweise großen und die Freigabewege (25) jeweils unter einem vergleichsweise kleinen Winkel zu einer senkrecht auf einer Achse (55) des Aufrollers (13) stehenden Geraden verlaufen.

7. Sicherheitsgurtvorrichtung nach einem der Ansprüche 2 bis 6,
**dadurch gekennzeichnet ,**
**dass** die Zwangsführung (23) für die beiden Verstellrichtungen unabhängig voneinander wirksame Steuerkonturen (29, 31) aufweist.

8. Sicherheitsgurtvorrichtung nach einem der Ansprüche 2 bis 7,
**dadurch gekennzeichnet ,**
**dass** die Zwangsführung (23) derart auf das Kupplungselement (19) und eine Antriebswelle (33) des Aufrollers (13) abgestimmt ist, dass bei einem Einsteuervorgang das Kupplungselement (19) zunächst entlang einer Einsteuerkontur (29) geführt ist und nach zumindest teilweisem Eingriff mit der Antriebswelle (33) die Einsteuerkontur (29) verlässt und in eine Freigabezone (35) gelangt, in der das Kupplungselement (19) an einem Einsteueranschlag (37) anliegt und aus der das Kupplungselement (19) entweder in den Freigabeweg (25) gelangt, wenn das Kupplungselement (19) aufgrund einer Bewegung der Antriebswelle (33) in Aufwickelrichtung (W) relativ zum Kupplungselement (19) außer Eingriff mit der Antriebswelle (33) gelangen kann, oder mit einer der Einsteuerkontur (29) gegenüber liegenden Aussteuerkontur (31) zusammenwirkt, wenn sich das Kupplungselement (19) zunächst aufgrund eines das Kupplungselement (19) und die Antriebswelle (33) in Eingriff haltenden äußeren Einflusses gemeinsam mit der Antriebswelle (33) in Abwickelrichtung (U) bewegt und dann aufgrund einer Veränderung des äußeren Einflusses außer Eingriff mit der Antriebswelle (33) gelangen kann.

9. Sicherheitsgurtvorrichtung nach einem der vorhergehenden Ansprüche,
**dadurch gekennzeichnet ,**
**dass** das Kupplungselement (19) an oder in einem insbesondere als Zahnrad ausgebildeten Trägerrad (39) angebracht ist, das mittels eines bevorzugt einen Elektromotor umfassenden Antriebsorgans drehbar ist.

10. Sicherheitsgurtvorrichtung nach Anspruch 9,
**dadurch gekennzeichnet ,**
**dass** das Kupplungselement (19) verschwenkbar am oder im Trägerrad (39) gehalten ist.

11. Sicherheitsgurtvorrichtung nach Anspruch 9 oder 10,
**dadurch gekennzeichnet ,**
**dass** das Kupplungselement (19) ein sich durch das Trägerrad (39) hindurch erstreckendes, insbesondere stiftartiges Führungselement (41) aufweist, das mit der auf der anderen Seite des Trägerrades (39) angeordneten Verstelleinrichtung (21) zusammenwirkt und insbesondere in eine Zwangsführung (23) der Verstelleinrichtung (21) eingreift.

12. Sicherheitsgurtvorrichtung nach einem der vorhergehenden Ansprüche,
**dadurch gekennzeichnet ,**
**dass** das Kupplungselement (19) klinken- oder klauenartig ausgebildet ist und eine mittels des Kupplungselementes (19) drehbare Antriebswelle (33) des Aufrollers (13) ein sägezahnartiges Profil (51) aufweist.

13. Sicherheitsgurtvorrichtung nach einem der vorhergehenden Ansprüche,
**dadurch gekennzeichnet ,**
**dass** für das Kupplungselement (19) eine bevorzugt als Rückstellfeder ausgebildete Rückstelleinrichtung (47) vorgesehen ist, die eine Aussteuerbewegung des Kupplungselementes (19) von der Eingriffsstellung in die Freigabestellung zumindest unterstützt.

14. Sicherheitsgurtvorrichtung nach Anspruch 13,
**dadurch gekennzeichnet ,**
**dass** die Rückstelleinrichtung (47) in eine Haltescheibe (49) integriert ist, mittels welcher das Kupplungselement (19) an oder in einem antreibbaren Trägerrad (39) gehalten ist, wobei bevorzugt die Haltescheibe (49) zusätzlich als Lager für das Kupplungselement (19) dient.

15. Sicherheitsgurtvorrichtung nach einem der vorhergehenden Ansprüche,
**dadurch gekennzeichnet ,**
**dass** die Verstelleinrichtung (21) unter Überwindung einer Haltekraft durch das angetriebene Kupplungselement (19) mitnehmbar ist.

16. Sicherheitsgurtvorrichtung nach Anspruch 15,
**dadurch gekennzeichnet ,**
**dass** die durch das Kupplungselement (19) mitgenommene Verstelleinrichtung (21) eine Aussteuerbewegung des Kupplungselementes (19) von der Eingriffsstellung in die Freigabestellung zumindest unterstützt.

17. Sicherheitsgurtvorrichtung nach einem der vorhergehenden Ansprüche,
**dadurch gekennzeichnet ,**
**dass** die Verstelleinrichtung (21) als insbesondere kreisringförmige Steuerscheibe ausgebildet ist, die auf zumindest einer Seite mit einer Zwangsführung (23) für das Kupplungselement (19) versehen ist und mehrere bevorzugt in zumindest näherungsweise radialer Richtung abstehende, bei Überschreiten einer Haltekraft nachgebende Haltearme (43) aufweist, die zum Halten der Steuerscheibe (21) mit einer ortsfesten Haltekontur (45) in Eingriff stehen.

## Geänderte Patentansprüche

### Geänderte Patentansprüche gemäss Regel 86(2) EPÜ.

**1.** Sicherheitsgurtvorrichtung für Kraftfahrzeuge mit
- einem Sicherheitsgurt (11),
- einem Gurtaufroller (13),
- einem bevorzugt reversiblen Antrieb (15) für den Aufroller (13), und
- einer Kupplung (17) zwischen dem Antrieb (15) und dem Aufroller (13),
wobei die Kupplung (17) wenigstens ein sowohl in Aufwickelrichtung (W) als auch in Abwickelrichtung (U) des Aufrollers (13) bewegbares, insbesondere um eine Achse (55) des Aufrollers (13) drehbares, Kupplungselement (19) aufweist, das zusätzlich zu dieser Bewegung zu einer Verstellbewegung zwischen einer Eingriffsstellung, in welcher es den Antrieb (15) mit dem Aufroller (13) koppeln kann, und einer Freigabestellung in der Lage ist, in welcher der Aufroller (13) vom Antrieb (15) entkoppelt ist,
wobei eine Verstelleinrichtung (21) vorgesehen ist, welche das Kupplungselement (19) von der Freigabestellung in die Eingriffsstellung steuert, während sich das Kupplungselement (19) relativ zur Verstelleinrichtung (21) in Aufwickelrichtung (W) bewegt, und das Kupplungselement (19) von der Eingriffsstellung in die Freigabestellung steuert, während sich das Kupplungselement (19) relativ zur Verstelleinrichtung (21) in Abwickelrichtung (U) bewegt, und
wobei die Verstelleinrichtung (21) eine zusätzliche Freigabefunktion (25) aufweist, durch die das Kupplungselement (19) ohne in eine der beiden Wickelrichtungen (W, U) erfolgende Bewegung relativ zur Verstelleinrichtung (21) aus der Eingriffsstellung in die Freigabestellung gelangen kann.
